Europäisches Patentamt

European Patent Office

Office européen des brevets

(19)

(11)  **EP 1 161 995 B1**

(12)  **EUROPÄISCHE PATENTSCHRIFT**

(45) Veröffentlichungstag und Bekanntmachung des
Hinweises auf die Patenterteilung:
**08.02.2006 Patentblatt 2006/06**

(51) Int Cl.:
***B01L 3/02*** *(2006.01)*

(21) Anmeldenummer: **01113300.6**

(22) Anmeldetag: **31.05.2001**

(54) **Verfahren und Anordnung zum Aufnehmen eines Mediums in eine Kappilarvorrichtung**

Method and apparatus for absorbing a medium into a capillary device

Procédé et dispositif pour absorber un milieu dans un dispositif capillaire

(84) Benannte Vertragsstaaten:
**AT BE CH CY DE DK ES FI FR GB GR IE IT LI LU
MC NL PT SE TR**

(30) Priorität: **31.05.2000 DE 10027104**

(43) Veröffentlichungstag der Anmeldung:
**12.12.2001 Patentblatt 2001/50**

(73) Patentinhaber: **Infineon Technologies AG**
**81669 München (DE)**

(72) Erfinder: **Lehmann, Volker, Dr.**
**80689 München (DE)**

(74) Vertreter: **Viering, Jentschura & Partner**
**Postfach 22 14 43**
**80504 München (DE)**

(56) Entgegenhaltungen:
**US-A- 3 881 527        US-A- 3 982 438**
**US-A- 4 511 534        US-A- 5 000 921**
**US-A- 5 843 767**

**Beschreibung**

Eine aus [1] bekannte Anordnung weist eine Mikrotiterplatte auf mit einer Vielzahl von Vertiefungen zur Aufnahme eines Analyten.

Eine solche Mikrotiterplatte wird eingesetzt beispielsweise in unterschiedlichsten Anwendungen der Medizin und Biotechnologie zur Aufnahme von zu analysierenden Flüssigkeiten, beispielsweise im Bereich der DNA-Analyse.

Üblicherweise wird in jeder Vertiefung ein unterschiedliches zu analysierendes Analyt über eine Pipette eingebracht, üblicherweise über ein als sogenannter Pipettierkamm ausgebildetes Element, wobei beispielsweise bei einem Pipettierkamm jeweils eine Pipette für jeweils eine Vertiefung einer Zeile der Mikrotiterplatte mit matrixförmig angeordneten Vertiefungen vorgesehen ist.

Mittels einer Pipette wird jeweils aufgrund eines in der Pipette aufgebauten Unterdrucks ein Analyt aus der entsprechenden Vertiefung, in die das Analyt eingefüllt ist und in die die Pipette eingetaucht ist, entnommen, d.h. aufgesaugt.

Die Pipette ist gemäß der aus [1] bekannten Anordnung jeweils über einen Schlauch mit einer der jeweiligen Pipette eindeutig zugeordneten Pumpe, mit der der Unterdruck erzeugt wird, derart gekuppelt, dass das Analyt mittels der Pumpe über die entsprechende Pipette angesaugt werden kann und entsprechend auch wieder, gesteuert von der Pumpe, in die Vertiefung eingebracht werden kann.

Eine solche bekannte Mikrotiterplatte weist beispielsweise 96 Vertiefungen bei einer Größe von 8 cm x 12 cm auf.

Eine solche bekannte Mikrotiterplatte kann aber grundsätzlich beliebig viele, üblicherweise bis zu 384 Vertiefungen aufweisen.

Ein Nachteil der aus [1] bekannten Anordnung ist insbesondere darin zu sehen, dass aufgrund der hohen Anzahl von Pumpen es unpraktikabel bis teilweise nicht mehr möglich ist, auf einer derart kleinen Fläche von 8 cm x 12 cm für jede Vertiefung einer Zeile, d.h. für eine so hohe Anzahl von Pipetten jeweils eine eigene Pumpe vorzusehen.

Somit ist das Herstellen eines solchen Pipettenkamms und damit einer solchen Anordnung zur Aufnahme flüssiger Analyten sehr aufwendig und teuer.

Weiterhin ist anzumerken, dass bei der aus [1] bekannten Anordnung üblicherweise jeweils eine peristaltische Pumpe zum Ansaugen und Einbringen des Analyten aus bzw. in die jeweilige Vertiefung verwendet wird.

Ein erheblicher Nachteil dieser bekannten Anordnung ist weiterhin darin zu sehen, dass für die Analyse üblicherweise eine Mindestmenge von einem zu analysierenden Analyt in der Größenordnung von 1 ml erforderlich ist.

Ein weiterer Nachteil ist darin zu sehen, dass die große Anzahl erforderlicher Pumpen mit zugehöriger Anordnung von Schläuchen sehr kompliziert und damit störanfällig ist.

Weiterhin ist in [2] ein sogenannter Flow-Thru-Chip™ für die Analyse des Analyten hinsichtlich der Existenz biologischen Materials in dem Analyt bekannt.

Der Flow-Thru-Chip™, eine Ausgestaltung eines Analysechips, weist eine Vielzahl von Kanälen auf, durch die das Analyt durch den Analysechip geführt wird, wobei die Oberfläche der Kanäle jeweils mit Fängermolekülen, allgemein mit Molekülen, die das entsprechend gesuchte biologische Material, dessen Existenz in dem Analyt nachgewiesen werden soll, vorzugsweise kovalent binden können.

Ist als biologisches Material in dem Analyten ein DNA-Strang mit vorgegebener DNA-Sequenz zu ermitteln, so sind an der Oberfläche eines solchen Flüssigkeitskanals in dem Flow-Thru-Chip™ DNA-Fängermoleküle mit einer zu der zu ermittelnden DNA-Sequenz komplementären Sequenz aufgebracht.

Ist in dem Analyten das DNA Material mit der gesuchten DNA-Sequenz vorhanden, so binden die DNA-Stränge mit den entsprechenden DNA-Fängermolekülen mit entgegengesetzter, d.h. komplementärer Sequenz.

Allgemein wird ein solcher Analysechip häufig zur Analyse, d.h. zum Nachweis makromolekularer Biopolymere, worunter beispielsweise Proteine oder Peptide oder auch DNA-Stränge einer jeweils vorgegebener Frequenz zu verstehen sind, eingesetzt.

Ferner ist es aus [3] bekannt, eine Membran aus Glas oder Silizium herzustellen, die eine Vielzahl von Poren mit einem konstanten Durchmesser von 0,1 $\mu$m bis 1 $\mu$m aufweist.

Somit liegt der Erfindung das Problem zugrunde, ein in einer ersten Phase, beispielsweise als Flüssigkeit oder als Gas vorliegendes erstes Medium in eine Kapillarvorrichtung aufzunehmen, wobei das Aufnehmen in einer gegenüber dem Stand der Technik vereinfachten und kostengünstigeren Weise erfolgt.

Das Problem wird durch das Verfahren und die Anordnung mit den Merkmalen gemäß den unabhängigen Patentansprüchen gelöst.

Bei einem Verfahren zum Aufnehmen eines ersten Mediums, welches in einer ersten Phase vorliegt, in eine Käpillarvorrichtung, wird in der Kapillarvorrichtung ein Unterdruck erzeugt. Mit dem Unterdruck wird das erste Medium in die Kapillarvorrichtung aufgenommen.

Das erste Medium kann als Flüssigkeit oder als Gas vorliegen.

Beispielsweise kann das erste Medium eine zu analysierende Flüssigkeit, d.h. ein Analyt sein, welches unter Verwendung der Kapillarvorrichtung und eines mit der Kapillarvorrichtung gekuppelten Analysechips, mit dem das aufgenommene erste Medium in Kontakt gebracht wird, analysiert wird.

In diesem Fall ist der Analysechip beispielsweise der in [2] beschriebene Flow-Thru-Chip™, wobei in den Flüssigkeitskanälen des Analysechips biologisches Material enthalten sein kann und auf der Oberfläche der Flüssigkeitskanäle aufgebracht sein kann, wobei das biologische Material derart eingerichtet ist, dass in dem ersten Medium enthaltene biologische Moleküle von Fängermolekülen gebunden werden können.

So können beispielsweise als biologisches Material DNA-Fängermoleküle in den Flüssigkeitskanälen aufgebracht sein zum Binden von in dem Analyten enthaltener DNA-Stränge mit zu der Sequenz der DNA-Fängermoleküle komplementärer DNA-Sequenz.

Es wird erfindungsgemäß gewährleistet, dass der in der Kapillarvorrichtung erzeugte Unterdruck kleiner ist als ein kritischer Druck, bei dessen Ausübung in der Kapillarvorrichtung eine Oberflächenspannung, die von dem ersten Medium oder einem im weiteren beschriebenen zweiten Medium in der Kapillarvorrichtung erzeugt wird, wenn das erste Medium vollständig von der Kapillarvorrichtung aufgenommen worden ist, überwunden würde.

Auf diese Weise wird verhindert, dass das zweite Medium, welches in einer zweiten Phase, die zu der ersten Phase unterschiedlich ist, in die Kapillarvorrichtung aufgenommen würde, nachdem das erste Medium vollständig aufgenommen worden ist.

Anschaulich bedeutet dies, dass in der Kapillarvorrichtung beispielsweise mittels einer Pumpensteuerung, die eine den Unterdruck in der Kapillarvorrichtung erzeugende Pumpe steuert, der in der Kapillarvorrichtung erzeugte Unterdruck derart eingestellt wird, dass durch den Unterdruck die Oberflächenspannung von dem ersten Medium oder, falls z.B. das erste Medium gasförmig und das zweite Medium als Flüssigkeit vorliegt, des zweiten Mediums in der Kapillarvorrichtung nicht überschritten wird.

Der kritische Druck in der Kapillarvorrichtung ergibt sich beispielsweise gemäß folgender Vorschrift:

$$P = 2 \cdot \frac{S}{r},$$

wobei mit

- S die Oberflächenspannung, die von dem ersten Medium in der Kapillarvorrichtung erzeugt wird, wenn das erste Medium vollständig von der Kapillarvorrichtung aufgenommen worden ist,
- r der Radius einer Kapillarvorrichtung mit kreisförmiger Grundfläche,

bezeichnet wird.

Für den Fall, dass das erste Medium eine Flüssigkeit ist, kann das zweite Medium ein Gas sein.

Somit wird gemäß dieser Ausgestaltung der Erfindung, wie im weiteren detailliert erläutert wird, verhindert, dass, wenn die gesamte Flüssigkeit aus einem Behälter mittels der Kapillarvorrichtung aufgenommen worden ist, Gas, beispielsweise Luft, in die Kapillarvorrichtung aufgenommen wird, so dass das Pumpergebnis auf diese Weise und damit verbunden das Analyseergebnis bei Einsatz eines Analysechips, nicht durch das zweite Medium beeinträchtigt wird.

Das erste Medium kann jedoch auch ein Gas sein, wobei in diesem Fall das zweite Medium eine Flüssigkeit ist.

Die Erfindung nutzt anschaulich den Effekt aus, dass durch eine aufgrund des Kapillareffekts erzeugte Oberflächenspannung der Flüssigkeit automatisch gewährleistet ist, dass ausschließlich das zu analysierende Medium in die Kapillarvorrichtung aufgenommen wird, da durch die Oberflächenspannung nach vollständiger Aufnahme des ersten Mediums durch dessen Oberflächenspannung das zweite Medium nicht aufgenommen wird. Liegt das zweite Medium als Flüssigkeit vor und das erste Medium als Gas, so wird nach vollständiger Aufnahme des ersten Mediums in die Kapillarvorrichtung durch die Oberflächenspannung des zweiten Mediums selbst dessen Aufnahme verhindert.

Diese Vorgehensweise ist sehr einfach und die zur Durchführung des Verfahrens vorgesehene Anordnung ist somit sehr kostengünstig herstellbar.

Durch den Einsatz eines Analysechips zur Analyse des von der Kapillarvorrichtung aufgenommenen Mediums wird insgesamt eine Anordnung zur Analyse eines Mediums, beispielsweise eines Analyten zur Gewebeanalyse, sehr einfach und kostengünstig möglich.

Gemäß einer weiteren Ausgestaltung der Erfindung ist die Kapillarvorrichtung eine poröse Platte mit einer Vielzahl von Kanälen, wobei in jeweils einem Kanal der Unterdruck erzeugt wird.

Jeder Kanal weist beispielsweise eine kreisförmige Grundfläche mit einen Radius von $0,1\,\mu m$ bis einige $\mu m$, vorzugsweise bis zu ungefähr $10\,\mu m$ auf. Bei einem nicht kreisförmigen Querschnitt des Kanals ist die Grundfläche in der kreisförmigen Grundfläche entsprechender Größe dimensioniert.

Ausführungsbeispiele der Erfindung sind in den Figuren dargestellt und werden im weiteren näher erläutert.

Es zeigen

Figur 1 eine Skizze einer Anordnung zur Aufnahme flüssiger Analyten gemäß einem ersten Ausführungsbeispiel der Erfindung;

Figur 2 einen Ausschnitt der Anordnung aus Figur 1 im Querschnitt in einem Zustand, in dem sich das gesamte Analyt in den Vertiefungen befindet;

Figur 3 den Ausschnitt aus Figur 2 in dem Zustand, dass ein Teil der Analyten durch die Pipetten in einen Aufnahmeraum angesaugt worden ist;

Figur 4     einen Querschnitt durch eine Pipette, anhand der ein Prinzip, dem das zweite Ausführungsbeispiel der Erfindung zugrunde liegt, veranschaulicht ist;

Figur 5     einen Querschnitt durch eine Pipette, anhand der ein Prinzip, dem das zweite Ausführungsbeispiel der Erfindung zugrunde liegt, veranschaulicht ist;

Figur 6     einen Querschnitt durch eine Pipette, anhand der ein Prinzip, dem das zweite Ausführungsbeispiel der Erfindung zugrunde liegt, veranschaulicht ist;

**Erstes Ausführungsbeispiel:**

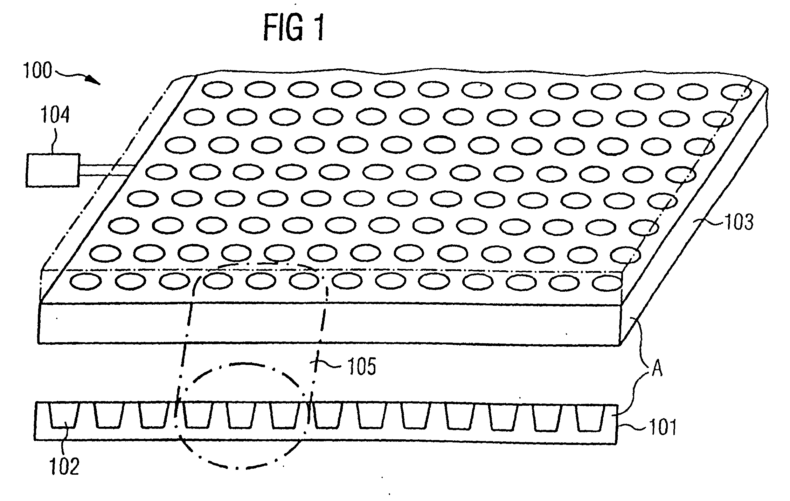

**Fig.1** zeigt eine Anordnung 100 zur Aufnahme flüssiger Analyten gemäß einem ersten Ausführungsbeispiel der Erfindung.

Die Anordnung 100 weist eine Mikrotiterplatte 101 mit einer Vielzahl von Vertiefungen 102 zur Aufnahme von üblicherweise jeweils unterschiedlichen Analyten, d.h. zu analysierenden Flüssigkeiten, auf.

Auf der Mikrotiterplatte 101 ist eine weitere Platte 103 aufgebracht, die mit der Mikrotiterplatte 101 mittels Schrauben (nicht dargestellt) gekuppelt ist. Die weitere Platte 103 wird im weiteren noch detailliert erläutert.

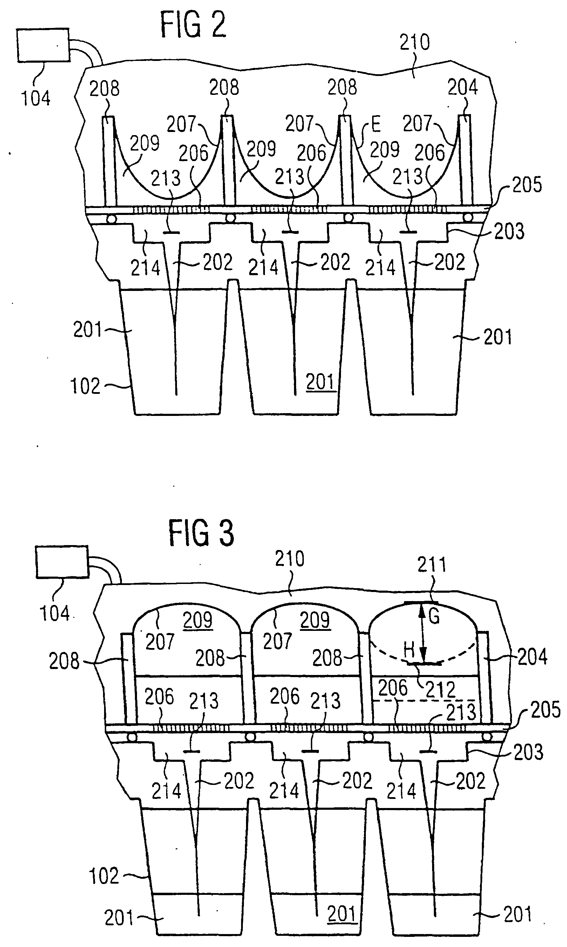

Die weitere Platte 103, die entsprechend den Vertiefungen 102 jeweils Pipetten, wie in Fig. 2 dargestellt, aufweist, ist luftdicht mit einer auf der weiteren Platte 103 aufgebrachten Pumpe 104 gekuppelt.

Mittels der Pumpe 104 ist der Druck innerhalb der weiteren Platte 103, wie im weiteren beschrieben, einstellbar, d.h. es ist in dem entsprechenden Raum durch die Pumpe 104 ein Überdruck oder ein Unterdruck frei einstellbar.

**Fig.2** zeigt einen vergrößerten Ausschnitt 105 der Anordnung 100 aus **Fig.1.**

Wie **Fig.2** zu entnehmen ist, ist üblicherweise in die Vertiefungen 102 jeweils ein zu analysierendes Analyt 201 eingebracht.

Die in der weiteren Platte 103 angeordneten Pipetten 202 sind derart in der weiteren Platte 103 angeordnet, dass bei Befestigen der weiteren Platte 103 auf der Mikrotiterplatte 102 mittels der nicht dargestellten Schrauben jeweils eine Pipette 202 in eine hierzu zugeordnete Vertiefung 102 und damit in das jeweilige Analyt 201 hineinragt.

Die Pipetten 202 sind an einem unteren Kunststoffkörper 203 der weiteren Platte 103 ausgebildet.

Der untere Kunststoffkörper 203 ist mit einem oberen Kunststoffkörper 204 gekuppelt, beispielsweise verklebt.

Gemäß diesem Ausführungsbeispiel ist es vorgesehen, dass zwischen dem unteren Kunststoffkörper 203 und dem oberen Kunststoffkörper 204 eine Zwischenplatte 205 angeordnet ist, in der der Analysechips 206, gemäß diesem Ausführungsbeispiel der in [2] beschriebener Analysechip, der auch als Flow-Thru-Chip™ bezeichnet wird, eingebracht ist derart, dass jeweils ein Analysechip 206 jeweils für eine Vertiefung vorgesehen ist.

Anschaulich bedeutet dies, dass jeweils ein Analysechip 206 vorgesehen ist zur Analyse eines Analyts 201, welches jeweils in einer Vertiefung 102 enthalten ist und gemäß einem im weiteren beschriebenen Verfahren über die Pipette 202 und den unteren Kunststoffkörper 203 durch den Analysechip 206, d.h. durch die Flüssigkeitskanäle des Analysechips 206 in den oberen Kunststoffkörper 204 eingesaugt wird.

Auf diese Weise wird das Analyt 201 jeweils mit den Fängermolekülen auf der Oberfläche der Flüssigkeitskanäle des Analysechips 206 in innigen Kontakt gebracht.

An dem oberen Kunststoffkörper 204 ist jeweils für eine Vertiefung 102 eine Membran 207 vorgesehen.

Dies bedeutet, dass der obere Kunststoffkörper 204 jeweils einen im wesentlichen der oberen Flächenform der Vertiefung 102 entsprechenden Raum bildet, der jeweils durch Seitenwände 208 des oberen Kunststoffkörpers 204 gebildet wird.

Anschaulich werden somit in dem oberen Kunststoffkörper 204 Kammern 209 gebildet, die jeweils begrenzt sind durch die Wände 208, die Membran 207 sowie die Zwischenplatte 205 mit dem integrierten Analysechip 206.

Die Membran 207 ist jeweils eine elastische Membran, beispielsweise aus Latex, die mittels einer Druckänderung in einem sich über dem oberen Kunststoffkörper 204 befindenden Raum 210, der mit der Pumpe 104 gekuppelt ist, verändert werden kann.

Der Raum 210 kann mit Gas oder mit einer Flüssigkeit gefüllt sein, wobei die Membran für das entsprechende Gas oder die Flüssigkeit, mit der der Raum 210 gefüllt ist, nicht permeabel ist.

Anschaulich wird somit aufgrund einer Druckveränderung in dem Raum 210 die Membran 207 verformt, so dass eine Druckveränderung in den jeweiligen Kammern 209 erzeugt wird, wodurch das Analyt 201 über die Pipette 202 durch den Analysechip 206 entweder angesaugt oder in die Vertiefung zurückgedrückt wird.

Die Flüssigkeitskanäle in dem Flow-Thru-Chip™ 206 sind mit biologischem Material, d.h. mit DNA-Fängermolekülen gemäß diesem Ausführungsbeispiel belegt, die mittels der bekannten Gold-Schwefel-Kopplung an der Oberfläche der Flüssigkeitskanäle in dem Analysechip 206 gebunden sind.

Weist das zu analysierende Analyt 201 DNA-Stränge mit einer Sequenz auf, die der DNA-Sequenz des DNA-Fängermoleküls komplementär ist, so binden diese DNA-Stränge an die DNA-Fängermoleküle in dem Flüssigkeitskanal des Analysechips 206 kovalent.

Anschaulich wird somit die Membran 207 jeweils durch Druckänderung, wie in **Fig.3** dargestellt, entsprechend der Größe der Membran zwischen den zwei Extrempositionen, in **Fig.3** symbolisiert durch die Tangenten 211, 212 an die jeweils maximal gewölbten Membrane.

Aufgrund der Verformung wird, wie oben beschrieben, das Analyt eingesaugt oder ausgegeben.

Weiterhin ist gemäß diesem Ausführungsbeispiel in dem unteren Kunststoffkörper 203 für jede Pipette 202 jeweils zwischen der Pipette 202 und der Zwischenplatte 205 eine Prellplatte 213 vorgesehen, durch die mittels einem Ausbilden einer entsprechenden Strömungsform um die Prellplatte 213 herum ein verbessertes Mischen des Analyts 201 gewährleistet ist.

Es sollte gemäß dieser Ausführungsform beachtet werden, dass die mittels der Membran 207 umgepumpte Flüssigkeitsmenge des Analyten 201 deutlich größer sein sollte als das durch den unteren Kunststoffkörper 203 für jeweils eine Pipette 202 definierte Volumen einer unteren Kammer 214 unterhalb des Analysechips 206.

Nach erfolgter Analyse der Analyten, die beispielsweise im Rahmen einer Hybridisierung typischerweise einige Stunden andauert, wird die Anordnung 100 mittels Membran-Maximalstellung in der Position 212 entleert.

Spülvorgänge der Anordnung mittels einer Spüllösung können in entsprechender Weise wie das Analysieren erfolgen.

**Zweites Ausführungsbeispiel:**

Das zweite Ausführungsbeispiel entspricht im wesentlichen dem ersten Ausführungsbeispiel mit dem Unterschied, dass keine Membran 207 erforderlich ist.

Um zu gewährleisten, dass, nachdem das gesamte Analyt aus einer jeweiligen Vertiefung angesaugt worden ist, keine Luft oder ein anderes Gas aus der Vertiefung in die Pipette eingesaugt wird, wird die Pumpe 104 derart betrieben, dass eine im weiteren beschriebene Oberflächenspannung, die sich an dem unteren Ende der jeweiligen Pipette 202 in dem Analyten ausbildet, nicht überschritten wird.

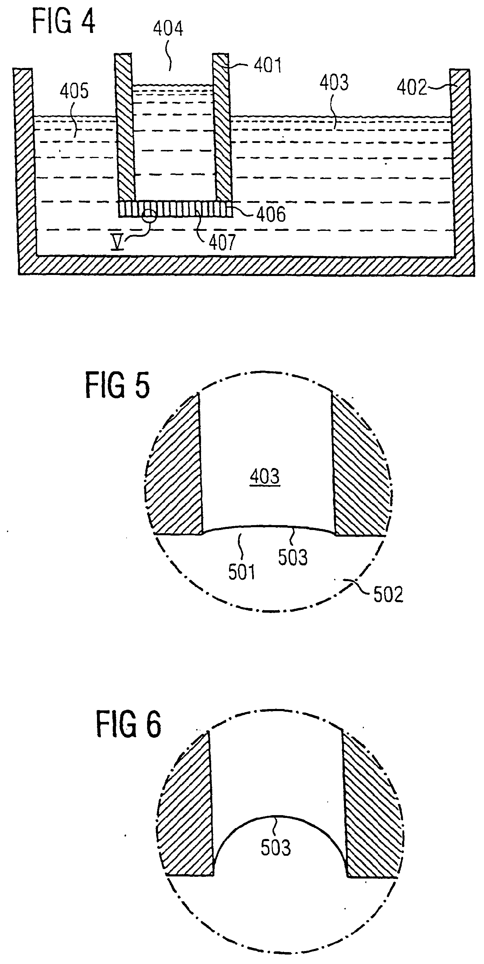

Dieses Prinzip ist in **Fig.4** veranschaulicht.

**Fig.4** zeigt eine Pipette 401, die in eine Vertiefung 402 und dabei in das Analyt 403 eingetaucht ist.

Die Pipette 401 gemäß diesem Ausführungsbeispiel ist als eine Röhre mit einem Durchmesser von ungefähr 1 cm ausgestaltet und an ihrem unteren Ende 405 mit einer Membran 406 abgeschlossen, beispielsweise verklebt, wobei die Membran 406 eine Vielzahl von Poren 407, mindestens jedoch eine Pore 407, mit einem vorzugsweise konstanten Durchmesser, gemäß diesem Ausführungsbeispiel einem Durchmesser von 10 μm, enthält.

Allgemein kann eine solche Pore 407 beispielsweise einen Durchmesser von 0,1 μm bis 100 μm aufweisen.

Gemäß diesem Ausführungsbeispiel wird eine Membran 407, wie sie aus [3] bekannt ist, aus Glas oder Silizium verwendet.

Gemäß diesem Ausführungsbeispiel ist ohne Einschränkung der Allgemeingültigkeit angenommen, dass die Membran 407 hydrophil ausgestaltet ist.

Das Analyt 403 dringt nun in die Poren 407 der Membran 406 ein und kann durch einen geringen Unterdruck, gemäß diesem Ausführungsbeispiel von beispielsweise 0,03 bar in die Pipette 401 gesaugt werden.

Ist die Vertiefung 402 geleert, d.h. ist das Analyt 403 vollständig in der Pipette 401 aufgenommen, so bildet sich, wie in **Fig.5** dargestellt, an jeder Porenöffnung 501 zwischen dem Analyten 403 und der sich lediglich noch in der Vertiefung 402 befindlichen Luft 502 ein Meniskus 503.

Um den sich bildenden Meniskus 503 derart zu verformen, dass ein Eintritt von Luft 502 in die Pore 407 möglich wird, muss ein wesentlich stärkerer Unterdruck erzeugt werden als der Unterdruck, der erforderlich ist, um das Analyt 403, allgemein eine Flüssigkeit, in die Kapillare, d.h. in die Pipette 401, einzusaugen.

Dieser erforderliche Druck P lässt sich gemäß folgender Vorschrift abschätzen:

$$P = 2 \cdot \frac{S}{r},$$

wobei

- mit S die Oberflächenspannung der jeweiligen Flüssigkeit, d.h. des Analyten 403, und
- mit r der Radius der jeweiligen Pore 407,

bezeichnet wird.

Diese Größen sind für eine vorgegebene Anordnung üblicherweise bekannt.

Wird als Analyt Wasser verwendet und weist eine Pore 407 einen Radius von 10 μm auf, so ergibt sich für den erforderlichen Druck P ein Wert von 0,29 bar.

Damit ein Lufteintritt in die Pore 407 verhindert werden kann, ist es erforderlich, einen Druck durch die Pumpe zu gewährleisten, der unterhalb dieses abgeschätzten Drucks liegt.

Diese Steuerung ist üblicherweise unkritisch, da, wie oben dargelegt, ein Unterdruck von 0,03 bar erforderlich ist, um das Analyt einzusaugen, wobei dieser Druck um eine Zehnerpotenz geringer ist als der kritische Druck, bei dem die Oberflächenspannung überwunden wäre und es zu einem Eintritt von Luft in die Pore 407 kommen könnte.

Dies bedeutet anders ausgedrückt, das der in der Pipette erzeugte Unterdruck P für diese Pipette mit den oben genannten Abmessungen in einem Bereich von 0,03 < P < 0,29 bar liegt.

Somit wird auf sehr einfache Weise ein Lufteintritt in die Pipette verhindert werden.

Es ist selbstverständlich ebenso möglich, bei einer hydrophoben Membran 407, in analoger Weise ein vorgebbares Gas mittels der oben beschriebenen Anordnung zu pumpen und einen Flüssigkeitseintritt durch die jeweilige Pore, allgemein durch eine Kapillare, zu verhindern.

Anschaulich ist durch dieses Ausführungsbeispiel eine Erkennung automatisiert möglich, ob schon das gesamte Analyt 403 aus der jeweiligen Vertiefung aufgenommen worden ist.

Es ist ferner automatisiert gewährleistet, dass kein anderes Medium in die Analysevorrichtung aufgenommen wird als das zu analysierende Material.

**Fig.6** zeigt den vergrößerten Ausschnitt eines unteren Endes einer Pore 407 aus **Fig.4** bei einem Unterdruck, der in einem Bereich liegt, der kurz davor ist, dass Luft 502 in die Pore 407 eintritt.

Dies wird deutlich aufgrund des stark gewölbten Meniskus 503.

In diesem Dokument sind folgende Veröffentlichungen zitiert:

[1] M. Winter, Robotik und Automationskonzepte in der kombinatorischen Chemie - Synthese- und Pipettierroboter, Transkript Laborwelt, Nr. 1, S. 25 - 29, 2000;

[2] A. Steel et al., The Flow-Thru Chip: A Three Dimensional Biochip Plattform, Microarray Biochip Technology, edited by M. Schena, S. 87 - 117, 2000;

[3] EP0 296 348 B1

**Patentansprüche**

1. Verfahren zum vollständigen Aufnehmen eines ersten Mediums, welches als eine erste Phase in einem Behällnis vorliegt, in eine Kapillarvorrichtung,

   • bei dem die Kapillarvorrichtung in das erste Medium eingetaucht wird,
   • bei dem mittels eines Unterdrucks, der in der Kapillarvorrichtung erzeugt wird, das erste Medium in diese aufgenommen wird,
   • wobei der erzeugte Unterdruck an dem Ende der Kapillarvorrichtung, welches in das erste Medium eingetaucht ist, beim Aufnehmen des ersten Mediums derart mittels einer Pumpen-Steuerung gesteuert wird, dass er kleiner ist als ein kritischer Unterdruck, bei dessen Ausübung in der Kapillarvorrichtung eine Oberflächenspannung, die von dem ersten Medium oder einem zweiten Medium in der Kapillarvorrichtung erzeugt wird, wenn das erste Medium vollständig von der Kapillarvorrichtung aufgenommen worden ist, überwunden würde, so dass das zweite Medium, welches in einer zweiten Phase, welche von der ersten Phase unterschiedlich ist, in die Kapillarvorrichtung aufgenommen würde, so dass nach vollständiger Aufnahme des ersten Mediums in die Kapillarvorrichtung durch die von dem ersten Medium oder einem zweiten Medium an dem in das erste Medium eingetauchten Ende der Kapillarvorrichtung verursachte Oberflächenspannung eine Aufnahme des zweiten Mediums verhindert wird.

2. Verfahren nach Anspruch 1,
   bei dem als Kapillarvorrichtung eine Pipette verwendet wird.

3. Verfahren nach Anspruch 1 oder 2,
   bei dem der kritische Druck in der Kapillarvorrichtung ermittelt wird gemäß folgender Vorschrift:

$$P = 2 \cdot \frac{S}{r},$$

wobei mit

   • S die Oberflächenspannung, die von dem ersten Medium in der Kapillarvorrichtung erzeugt wird, wenn das erste Medium vollständig von der Kapillarvorrichtung aufgenommen worden ist,
   • r der Radius einer Kapillarvorrichtung mit kreisförmiger Grundfläche,

bezeichnet wird.

4. Verfahren nach einem der Ansprüche 1 bis 3,
   bei dem als erstes Medium eine Flüssigkeit und als zweites Medium ein Gas verwendet wird.

5. Verfahren nach einem der Ansprüche 1 bis 3,
   bei dem als erstes Medium ein Gas und als zweites Medium eine Flüssigkeit verwendet wird.

6. Anordnung zum Aufnehmen eines ersten Mediums, welches in einer ersten Phase vorliegt, in eine Kapillarvorrichtung, mit

   • der Kapillarvorrichtung zur Aufnahme des ersten Mediums,
   • einer mit der Kapillarvorrichtung gekuppelten Pumpe zum Erzeugen eines Unterdrucks in der Kapillarvorrichtung,
   • einer Pumpen-Steuerung zum Steuern des in der Kapillarvorrichtung erzeugten Unterdrucks,
   • bei dem die Pumpen-Steuerung derart eingerichtet ist, dass der erzeugte Unterdruck bei Eintauchen der Kapillarvorrichtung in das erste Medium derart gesteuert wird, dass er kleiner ist als ein kritischer Unterdruck, bei dessen Ausübung in der Kapillarvorrichtung eine Oberflächenspannung, die von dem ersten Medium oder von einem zweiten Medium in der Kapillarvorrichtung erzeugt wird, wenn das erste Medium vollständig von der Kapillarvorrichtung aufgenommen worden ist, überwunden würde, so dass ein zweites Medium, welches in einer zweiten Phase, welche von der ersten Phase unterschiedlich ist, in die Kapillarvorrichtung aufgenommen würde, so dass nach vollständiger Aufnahme des ersten Mediums in die Kapillarvorrichtung durch die von dem ersten Medium oder einem zweiten Medium an dem in das erste Medium eingetauchten Ende der Kapillarvorrichtung verursachte Oberflächenspannung eine Aufnahme des zweiten Mediums verhindert wird.

**7.** Anordnung nach Anspruch 6,
mit einem Analysechip zum Analysieren des in die Kapillarvorrichtung aufgenommenen ersten Mediums.

**8.** Anordnung nach Anspruch 7,
bei der die mit dem ersten Medium in Kontakt kommende Fläche zumindest eines Teils der Analysechips biologisches Material aufweist zum Binden von in dem ersten Medium enthaltenen Molekülen.

**9.** Anordnung nach einem der Ansprüche 6 bis 8,
bei der die Kapillarvorrichtung eine Pipette ist.

**10.** Anordnung nach einem der Ansprüche 6 bis 9,
bei der die Pumpen-Steuerung derart eingerichtet ist, dass der kritische Druck in der Kapillarvorrichtung ermittelt wird gemäß folgender Vorschrift:

$$P = 2 \cdot \frac{S}{r},$$

wobei mit

• S die Oberflächenspannung, die von dem ersten Medium in der Kapillarvorrichtung erzeugt wird, wenn das erste Medium vollständig von der Kapillarvorrichtung aufgenommen worden ist,
• r der Radius einer Kapillarvorrichtung mit kreisförmiger Grundfläche,

bezeichnet wird.

**11.** Anordnung nach einem der Ansprüche 6 bis 10,
bei der das erste Medium eine Flüssigkeit ist und das zweite Medium ein Gas ist.

**12.** Anordnung nach einem der Ansprüche 6 bis 10,
bei der das erste Medium ein Gas ist und das zweite Medium eine Flüssigkeit ist.

**13.** Anordnung nach einem der Ansprüche 6 bis 12,
bei der die Kapillarvorrichtung eine poröse Platte mit einer Vielzahl von Kanälen ist, wobei in jeweils einem Kanal der Unterdruck erzeugt wird.

**Revendications**

**1.** Procédé destiné à récupérer entièrement un premier milieu, lequel est présent dans un récipient dans une première phase, dans un dispositif capillaire,

- dans lequel le dispositif capillaire est immergé dans le premier milieu,
- dans lequel, au moyen d'une dépression qui est générée dans le dispositif capillaire, le premier milieu est récupéré dans ledit dispositif,
- la dépression générée à l'extrémité du dispositif capillaire, lequel est immergé dans le premier milieu, étant commandée au moyen d'une commande de pompe à la réception du premier milieu, de telle sorte qu'elle est inférieure à une dépression critique, qui, lorsqu'elle est exercée dans le dispositif capillaire, permettrait de surmonter une tension superficielle qui est engendrée par le premier milieu ou un second milieu dans le dispositif capillaire, lorsque le premier milieu a été entièrement récupéré par le dispositif capillaire, de sorte que le second milieu, lequel se trouve dans une seconde phase, laquelle est différente de la première phase, serait récupéré dans le dispositif capillaire, de sorte qu'après récupération entière du premier milieu dans le dispositif capillaire, la tension superficielle engendrée par le premier milieu ou un second milieu à l'extrémité du dispositif capillaire immergée dans le premier milieu empêche la récupération du second milieu.

**2.** Procédé selon la revendication 1, dans lequel une pipette est utilisée comme dispositif capillaire.

**3.** Procédé selon la revendication 1 ou 2, dans lequel la pression critique dans le dispositif capillaire est déterminée selon la formule suivante :

$$P = 2 \cdot \frac{S}{r}$$

- S désignant la tension superficielle qui est engendrée par le premier milieu dans le dispositif capillaire lorsque le premier milieu a été entièrement récupéré par le dispositif capillaire,
- r désignant le rayon d'un dispositif capillaire présentant une surface de base circulaire.

**4.** Procédé selon l'une quelconque des revendications 1 à 3, dans lequel un liquide est utilisé comme premier milieu et un gaz comme second milieu.

**5.** Procédé selon l'une quelconque des revendications 1 à 3, dans lequel un gaz est utilisé comme premier milieu et un liquide comme second milieu.

**6.** Système destiné à faire récupérer un premier milieu, lequel est présent dans une première phase, dans un dispositif capillaire, comprenant

- le dispositif capillaire destiné à récupérer le premier milieu,
- une pompe couplée au dispositif capillaire destinée à générer une dépression dans le dispositif capillaire,
- une commande de pompe destinée à commander la dépression générée dans le dispositif capillaire,
- dans lequel la commande de pompe est réglée pour que la dépression générée à l'immersion du dispositif capillaire dans le premier milieu soit commandée de telle sorte qu'elle soit inférieure à une dépression critique, qui, lorsqu'elle est exercée dans le dispositif capillaire, permettrait de surmonter une tension superficielle qui est engendrée par le premier milieu ou un second milieu dans le dispositif capillaire, lorsque le premier milieu a été récupéré entièrement par le dispositif capillaire, de sorte qu'un second milieu, lequel est présent dans une seconde phase, laquelle est différente de la première phase, serait récupéré dans le dispositif capillaire, de sorte qu'après récupération entière du premier milieu dans le dispositif capillaire, la tension superficielle engendrée par le premier milieu ou un second milieu à l'extrémité du dispositif capillaire immergée dans le premier milieu empêche la récupération second milieu.

**7.** Système selon la revendication 6, comprenant une puce d'analyse destinée à analyser le premier milieu récupéré dans le dispositif capillaire.

**8.** Système selon la revendication 7, dans lequel la surface d'au moins une partie de la puce d'analyse, venant en contact avec le premier milieu, comprend un matériau biologique destiné à lier les molécules contenues dans le premier milieu.

**9.** Système selon l'une quelconque des revendications 6 à 8, dans lequel le dispositif capillaire est une pipette.

**10.** Système selon l'une quelconque des revendications 6 à 9, dans lequel la commande de pompe est réglée de telle sorte que la pression critique dans le dispositif capillaire soit déterminée selon la formule suivante :

$$P = 2 \cdot \frac{S}{r}$$

- S désignant la tension superficielle qui est engendrée par le premier milieu dans le dispositif capillaire lorsque le premier milieu a été entièrement récupéré par le dispositif capillaire,
- r désignant le rayon d'un dispositif capillaire doté d'une surface de base circulaire.

**11.** Système selon l'une quelconque des revendications 6 à 10, dans lequel le premier milieu est un liquide et le second milieu est un gaz.

**12.** Système selon l'une quelconque des revendications 6 à 10, dans lequel le premier milieu est un gaz et le second milieu est un liquide.

**13.** Système selon l'une quelconque des revendications 6 à 12, dans lequel le dispositif capillaire est une plaque poreuse dotée d'une pluralité de canaux, la dépression étant générée dans respectivement un canal.

**Claims**

**1.** Method for taking up fully a first medium, which is present as a first phase in a container, into a capillary device,

• in which the capillary device is dipped into the first medium,
• in which the first medium is taken up into the capillary device by means of a reduced pressure which is produced in the capillary device,
• wherein the reduced pressure at the end of the capillary device which is dipped into the first medium is controlled when taking up the first medium by means of a pump controller in such a way that it is less than a critical pressure, at whose exertion in the capillary device, a surface tension which is produced by the first medium or a second medium in the capillary device, when the first medium has been taken up fully by the capillary device, would be overcome so that the second medium which is present in a second phase which is different from the first phase, would be taken up into the capillary device, so that after fully taking up the first medium in the capillary device by the surface tension caused by the first medium or a second medium at the end of the capillary device which is dipped into the first medium, a taking up of the second medium is prevented.

2. Method according to Claim 1, in which a pipette is used as the capillary device.

3. Method according to Claims 1 or 2, in which the critical pressure in the capillary device is determined according to the following rule:

$$P \; = \; 2 \cdot \frac{S}{r},$$

where

• S denotes the surface tension which is produced by the first medium in the capillary device when the first medium has been taken up fully by the capillary device,
• r denotes the radius of a capillary device with a circular base.

4. Method according to one of Claims 1 to 3, in which a liquid is used as the first medium and a gas is used as the second medium.

5. Method according to one of Claims 1 to 3, in which a gas is used as the first medium and a liquid is used as the second medium.

6. Apparatus for taking up a first medium, which is present in a first phase, into a capillary device, comprising

• the capillary device for taking up the first medium,
• a pump, coupled to the capillary device, for producing a reduced pressure in the capillary device,
• a pump controller for controlling the reduced pressure produced in the capillary device,
• in which the pump controller is designed in such a way that the reduced pressure when dipping into the first medium is controlled in such a way that it is less than a critical reduced pressure such that, if it is exerted in the capillary device, a surface tension which is produced by the first medium or by a second medium in the capillary device, when the first medium has been taken up fully by the capillary device, would be overcome so that a second medium which is present in a second phase which is different from the first phase, would be taken up into the capillary device, so that after fully taking up the first medium in the capillary device by the surface tension caused by the first medium or a second medium at the end of the capillary device which is dipped into the first medium, a taking up of the second medium is prevented.

7. Apparatus according to Claim 6, having an analysis chip for analyzing the first medium taken up into the capillary device.

8. Apparatus according to Claim 7, in which the surface of at least a part of the analysis chips, which surface comes into contact with the first medium, has biological material for binding the molecules contained in the first medium.

9. Apparatus according to one of Claims 6 to 8, in which the capillary device is a pipette.

10. Apparatus according to one of Claims 6 to 9, in which the pump controller is designed in such a way that the critical pressure in the capillary device is determined according to the following rule:

$$P \; = \; 2 \cdot \frac{S}{r},$$

where

• S denotes the surface tension which is produced by the first medium in the capillary device when the first medium has been taken up fully by the capillary device,
• r denotes the radius of a capillary device with a circular base.

11. Apparatus according to one of Claims 6 to 10, in which the first medium is a liquid and the second medium is a gas.

12. Apparatus according to one of Claim 6 to 10, in which the first medium is a gas and the second medium is a liquid.

13. Apparatus according to one of Claims 6 to 12, in which the capillary device is a porous plate having a plurality of channels, the reduced pressure being in each case produced in one channel.

FIG 1

EP 1 161 995 B1

## FIG 2

104

208    208    208    204
      207         207    E  207
209        206  209    206    209    206
      213         213         213
                                      205
                                      203
214    202  214    202  214    202

201                              201
102                  201

## FIG 3

104
                    210        211
208    207  209    207  209    G
            208         208    H
            206  213  206  213  206  212
                                  213    205
                                        203
214    202  214    202  214    202

102
201              201              201

11

FIG 4

FIG 5

FIG 6